(19) Europäisches Patentamt
European Patent Office
Office européen des brevets

(11) EP 2 832 540 B1

# (12) EUROPEAN PATENT SPECIFICATION

(45) Date of publication and mention of the grant of the patent:
**28.02.2018 Bulletin 2018/09**

(21) Application number: **13768713.3**

(22) Date of filing: **28.03.2013**

(51) Int Cl.:
***B32B 27/28*** *(2006.01)* ***B29C 47/06*** *(2006.01)*
***B32B 27/34*** *(2006.01)* ***B65D 65/40*** *(2006.01)*

(86) International application number:
**PCT/JP2013/059193**

(87) International publication number:
**WO 2013/146988 (03.10.2013 Gazette 2013/40)**

## (54) MULTILAYER STRUCTURE AND METHOD FOR PRODUCING SAME

MEHRSCHICHTIGE STRUKTUR UND VERFAHREN ZUR HERSTELLUNG DAVON

STRUCTURE MULTI-COUCHES ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2012 JP 2012082190**

(43) Date of publication of application:
**04.02.2015 Bulletin 2015/06**

(73) Proprietor: **The Nippon Synthetic Chemical Industry Co., Ltd.**
**Osaka-shi, Osaka 530-0018 (JP)**

(72) Inventor: **YOSHIDA Tomonori**
**Osaka-shi**
**Osaka 530-0018 (JP)**

(74) Representative: **Hoffmann Eitle**
**Patent- und Rechtsanwälte PartmbB**
**Arabellastraße 30**
**81925 München (DE)**

(56) References cited:
**EP-A2- 0 249 051**
**WO-A1-2011/027741**
**JP-A- H0 797 491**
**JP-A- S63 113 062**
**JP-A- 2005 212 367**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 832 540 B1

## Description

### TECHNICAL FIELD

The present invention relates to a multilayer structure comprising a saponified ethylene-vinyl ester copolymer layer containing a drying agent, in particular, a multilayer structure still having excellent appearance even after exposure to high humidity condition. The present invention also relates to a method for producing the multilayer structure.

### BACKGROUND ART

Saponified ethylene-vinyl ester copolymer (hereinafter referred to as "EVOH resin") exhibits gas-barrier property against oxygen, and therefore is used for a gas-barrier layer of wrapping film for foods.

EVOH resin film is insoluble, but easy to absorb moisture. For this property, wrapping film employing a gas-barrier layer of EVOH resin requires laminating highly hydrophobic polyolefin films on both faces of the EVOH resin layer to form a multilayer film. Since polyolefin layer has poor adhesiveness to EVOH resin layer, a typical multilayer film comprises an adhesive resin layer made of polyolefin-based polymer modified with carboxyl group between the polyolefin layer and the EVOH resin layer.

However, even such a multilayer film is difficult to completely prohibit permeation of moisture by the polyolefin layer as an outer surface of the multilayer film exposed to external environment, and difficult to completely prohibit invasion of moisture from the ends of the multilayer film. Therefore, in case that the multilayer film is subjected to a hydrothermal treatment for long hours such as retorting treatment, the multilayer film is whitened or lowered in gas-barrier property immediately after the treatment, or is difficult to maintain its appearance , which are shortcomings of the multilayer film.

As for a multilayer structure preventing from lowering gas-barrier property of EVOH layer due to the absorption of moisture, US patent publication No. 4753845 (patent document 1) discloses a multilayer structure comprising a gas-barrier layer and a protecting layer made of hydrophobic resin such as polypropylene on both faces of the gas-barrier layer through adhesive resin layer, the gas barrier layer containing EVOH resin and a network polymer such as moisture absorbing polymer, the network polymer is added as a drying agent.

Moreover, WO2011/27741 (patent document 2) suggests a resin composition for a gas-barrier layer. The resin composition comprises EVOH resin and completely or partially dehydrated polyvalent metal sulfate hydrate added as a drying agent, which is able to suppress impairment in gas-barrier property due to hydrothermal treatment. The dehydrated polyvalent metal sulfate hydrate is capable of forming hydrate crystal by moisture absorption. The patent document 2 also discloses that a multilayer film comprising a protective layer made of polypropylene laminated on both faces of the gas-barrier layer through adhesive resin layer of maleic anhydride-modified polypropylene resin. This multilayer film can allow the drying agent to absorb moisture intruded from film ends or permeated through the thermoplastic resin film as the outer surface layer, thereby preventing from lowering gas-barrier property of the gas barrier layer of the EVOH resin composition due to moisture absorption.

### PRIOR ART

### PATENT DOCUMENT

[patent document 1] US patent publication No. 4753845
[patent document 2] WO2011/27741

### SUMMARY OF THE INVENTION

### TECHNICAL PROBLEM TO BE SOLVED BY THE INVENTION

In case that a multilayer film disclosed in the patent document 1 or 2 is exposed to high humidity condition for long hours, a blister like granule is generated, which is a strange phenomenon because the phenomenon does not appear in the case of a multilayer film comprising a gas-barrier layer of EVOH resin without drying agent. The strange phenomenon affects appearance of transparent wrapping film, which is problematic.

Under these situations, the object of this invention is to provide a multilayer structure but retaining excellent appearance thereof even after exposure to high humidity condition regardless of the gas-barrier layer of EVOH resin composition containing drying agent.

## MEANS FOR SOLVING THE PROBLEMS

The present inventors have examined a multilayer structure having a blister like a granule caused from the exposure to high humidity condition for long hours, and found that a waterdrop has generated at the interface between EVOH resin composition layer and adhesive resin layer, and the generated waterdrop appeared the granule-like blister in appearance of the multilayer structure. The inventors have further examined the waterdrop and revealed that the waterdrop is aqueous solution of drying agent contained in the EVOH resin composition. This phenomenon is presumed to result from that the drying agent grabs moisture over the capacity of its absorption ability. The excess grabbed moisture is discharged in response to changes of environment, or dissolving the drying agent itself, resulting in the waterdrop.
The inventors have studied hard about types of drying agent as well as the interface between EVOH resin layer and adhesive resin layer, and reached to the present invention.
A multilayer structure of the present invention comprises a laminated unit ($\beta/\alpha/\beta$) wherein polyamide resin layers ($\beta$) are integrally laminated on both faces of a resin composition layer ($\alpha$) containing (A) saponified ethylene-vinyl ester copolymer and (B) drying agent.
The drying agent is preferably a hydrate-forming salt. Also, it is preferred that the polyamide resin of the polyamide resin layer contains 20 to 60 % of amide bond. It is preferred that the content ratio (B/A) of the drying agent (B) to the saponified ethylene-vinyl ester copolymer (A) is from 50/50 to 1/99 on the basis of weight.
It is preferred that a hydrophobic resin layer is laid on at least one side of the laminated unit.
Also, a preferable thickness of the multilayer structure is from 10 to 5000 $\mu$m.
A method for producing a multilayer structure of the present invention comprises a process of coextruding a resin composition containing (A) saponified ethylene-vinyl ester copolymer and (B) drying agent with polyamide resin upper and lower sides of the resin composition to form a laminated unit ($\beta/\alpha/\beta$) of the resin composition layer ($\alpha$) sandwiched by the polyamide resin layers ($\beta$). The coextruding process is preferably carried out at a temperature of 200 to 280 °C.

## EFFECT OF THE INVENTION

The multilayer structure of the present invention can retain excellent appearance with suppressing the generation of waterdrop between EVOH resin composition layer and its adjacent layers even though the multilayer structure is exposed to high humidity condition for long hours.

## MODES FOR CARRYING OUT THE INVENTION

The following is merely described for an embodiment, and therefore the present invention is not construed with limitation of the following description.
The multilayer structure of the present invention comprises a laminated unit ($\beta/\alpha/\beta$) wherein polyamide resin layers ($\beta$) are integrally laminated on both faces of an EVOH resin composition layer ($\alpha$) containing (A) EVOH resin and (B) drying agent. The laminated unit ($\beta/\alpha/\beta$) is suitable for a gas-barrier layer unit.

[EVOH resin composition layer ($\alpha$)]

The EVOH resin composition layer ($\alpha$), which is an element of the laminated unit, is made from a resin composition comprising (A) EVOH resin and (B) drying agent. The resin composition is described below.

(1)EVOH resin (A)

EVOH resin is an insoluble thermoplastic resin. The EVOH resin is usually obtained from copolymerizing ethylene and vinyl ester-based monomer followed by saponification. Any known EVOH resin may be used for the EVOH resin. As the vinyl ester-based monomer, vinyl acetate is typically used from the economic view. Any known polymerization method including, for example, solution polymerization, suspension polymerization, and emulsion polymerization may be employed, however, solution polymerization is typically employed. Saponification of the obtained ethylene-vinyl ester copolymer may be carried out by any known method.
Thus produced EVOH resin is mainly composed of ethylene unit and vinyl alcohol structural unit and contains slight amount of vinyl ester structural unit remained still after saponification.
The content of ethylene unit in the EVOH resin (A) used for the invention is usually from 20 to 60 mol%, preferably 23 to 50 mol%, particularly preferably 25 to 38 mol%. Unduly small content causes lowering of gas-barrier property and melt-molding property under high humidity condition. Contrarily, unduly high content causes insufficient gas-barrier property, or lowering of adhesiveness between EVOH resin layer and polyamide resin layer.

The content of ethylene unit may be measured according to, for example, ISO14663.

Saponification degree of vinyl ester component of the EVOH resin (A) is usually from 80 to 100 mol%, preferably 90 to 99.99 mol%, more preferably 99 to 99.99 mol%. Unduly low saponification degree tends to lower gas-barrier property, thermal stability, or humidity resistance. The saponification degree of vinyl ester component may be measured according to, for example, JIS K6726, with the provision of using a solution dissolving EVOH resin in water/methanol solvent.

Melt flow rate (MFR) (210 °C, load of 2,160 g) of the EVOH resin (A) is usually from 0.5 to 100 g/10 min, preferably I to 50 g/10 min, particularly preferably 2 to 35 g/10 min. Unduly large MFR tends to become unstable film production. Unduly small MFR means unduly high viscosity, which tends to make more difficult in melt-molding.

A mixture of two or more EVOH resins each having different ethylene content, saponification degree, or MFR may be used for the EVOH resin (A), as long as the average value of the mixture is satisfied at the above-mentioned ranges.

The EVOH resin (A) may be a copolymer containing a copolymerizable ethylenic unsaturated monomer in an amount which the effect of the invention is not inhibited, for example 10 mol% or less. Examples of the copolymerizable ethylenic unsaturated monomer include olefins such as propylene, 1-butene, and isobutene; hydroxyl group-containing $\alpha$-olefins such as 3-buten-1-ol, 4-penten-1-ol and 5-hexene-1,2-diol, or its derivative such as ester or acylate thereof; unsaturated acids such as acrylic acid, methacrylic acid, crotonic acid, phthalic acid (or phthalic anhydride), maleic acid (or maleic anhydride), and itaconic acid (or itaconic anhydride), or salt thereof, or mono- or di-alkyl ester having from 1 to 18 carbon atoms; acrylamide, N-alkyl acrylamide having from 1 to 18 carbon atoms, N,N-dimethylacrylamide, and 2-acrylamide propanesulfonic acid, or salt thereof; acrylamides such as acrylamide propyl dimethylamine, or acid salt or quaternary salt thereof; methacrylamides such as methacrylamide, N-alkylmethacrylamide having from 1 to 18 carbon atoms, N,N-dimethylmethacrylamide, 2-methacrylamide propanesulfonic acid or salt thereof and methacrylamide propyl dimethylamine, or acid salt or quaternary salt thereof; N-vinylamides such as N-vinylpyrrolidone, N-vinylformamide, N-vinylacetamide; vinyl cyanides such as acrylonitrile and methacrylonitrile; vinyl ethers such as alkyl vinyl ether having from 1 to 18 carbon atoms, hydroxy alkyl vinyl ether, and alkoxyalkylvinyl ether; vinyl halide compounds such as vinyl chloride, vinylidene chloride, vinyl fluoride, vinylidene fluoride and vinyl bromide; vinylsilanes such as trimethoxyvinylsilane; allyl halide compounds such as allyl acetate and allyl chloride; allyl alcohols such as allyl alcohol and dimethoxy allyl alcohol; trimethyl-(3-acrylamide-3-dimethylpropyl)-ammonium chloride, acrylamide-2-methylpropanesulfonic acid, and so on.

EVOH resin having primary hydroxyl group introduced into its side chain by copolymerization, inter alia EVOH resin having 1,2-diol structural unit represented by the following general formula (1), is particularly preferred because the EVOH resin has an improved binding strength to polyamide resin layer at its interface.

[formula 1]

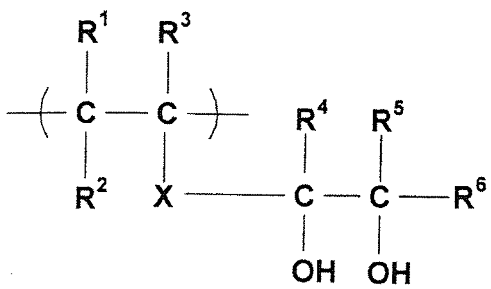

(1)

In the formula (1), each of $R^1$, $R^2$, and $R^3$ represents independently hydrogen or an organic group, and X represents a single bond or a binding chain, and each of $R^4$, $R^5$, and $R^6$ represents independently hydrogen or an organic group.

As for each of $R^1$ to $R^6$, a saturated hydrocarbon group having from, usually 1 to 30, particularly 1 to 15, further 1 to 4 carbon atoms, or hydrogen, is preferred, and hydrogen is more preferred. It is most preferred that all of $R^1$ to $R^6$ are hydrogen.

Examples of the organic group used for $R^1$ to $R^6$ include, without limitation, saturated hydrocarbon group such as methyl, ethyl, n-propyl, isopropyl, n-butyl, isobutyl and tert-butyl group; aromatic hydrocarbon group such as phenyl and benzyl; halogen atom, hydroxyl group, acyloxy group, alkoxycarbonyl group, carboxyl group, sulfonic acid group, and so on.

Typically, X in the formula (1) is a single bond. Accordingly, the most preferable 1,2-diol unit is the 1,2-diol unit wherein all $R^1$-$R^6$ are hydrogen atoms and X is a single bond, i.e. the structural unit represented by the formula (1a) shown in below.

[formula 1a]

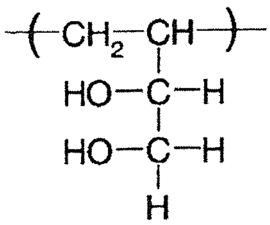

(1a)

X in the general formula (1) may be binding chain, as far as the effect of the invention is not inhibited. Examples of the binding chain include hydrocarbon chain such as alkylene, alkenylene, alkynylene, phenylene, naphthylene (where the hydrocarbon may be substituted with a halogen such as fluorine, chlorine, or bromine); ether bond-containing group such as -O-, $-(CH_2O)_m-$, $-(OCH_2)_m-$, and $-(CH_2O)_mCH_2-$; carbonyl group-containing unit such as -CO-, -COCO-, $-CO(CH_2)_mCO-$, and $-CO(C_6H_4)CO-$; sulfur atom-containing group such as -S-, -CS-, -SO-, and $-SO_2-$; nitrogen atom-containing group such as -NR-, -CONR-, -NRCO-, - CSNR-, -NRCS-, and -NRNR-; hetero atom-containing group including phosphorus-containing group such as $-HPO_4-$, silicon-containing group such as $-Si(OR)_2-$, $-OSi(OR)_2-$, and $-OSi(OR)_2O-$, and titanium-containing group such as $-Ti(OR)_2-$, $-OTi(OR)_2-$, and - $OTi(OR)_2O-$; metal-containing group including aluminum-containing group such as -Al(OR)-, -OAl(OR)-, and -OAl(OR)O-, wherein individual R is independently any substituting group, preferably hydrogen or alkyl group, and m is natural number of usually 1 to 30, preferably 1 to 15, more preferably 1 to 10. Among these binding chains, $-CH_2OCH_2-$ and hydrocarbon chain having from 1 to 10 carbon atoms are preferred, hydrocarbon chain having from 1 to 6 carbon atoms is more preferred, hydrocarbon chain having one carbon atom is particularly preferred, from the viewpoint of stability in production and use.

Further, the EVOH resin (A) may be post-modified like urethanation, acetalization, cyanoethylation, or oxyalkylenation.

EVOH resin composition layer ($\alpha$) is a layer of resin composition containing EVOH resin (A) as a primary resin. Specifically, the content of EVOH resin (A) is usually from 50 to 99 wt%, preferably 60 to 95 wt%, particularly preferably 70 to 90 wt% based on the total weight of EVOH resin composition. Unduly small content of the EVOH resin tends to cause insufficient gas-barrier property.

(2) Drying agent (B)

A generally known hygroscopic compound or water-soluble drying agent is used for the drying agent (B). Preferably water-soluble drying agent, more preferably hydrate-forming metal salt, is used. A problem associated with inferior appearance resulting from excess moisture absorption often develop in the case of using water-soluble drying agent, in particular, hydrate-forming metal salt, therefore the effect of the invention would be obtained in such cases.

Examples of the hygroscopic compound includes silica gel, bentonite, molecular sieve, and superabsorbent polymer.

Examples of the water-soluble drying agent include sodium chloride, sodium nitrate, sugar, trilithium phosphate, sodium metaphosphate, sodium polyphosphate, and the like various hydrate-forming metal salt.

Hydrate-forming metal salt used for the invention is a salt capable of absorbing moisture for crystallization water. A method of producing the hydrate-forming metal salt is not limited, but a hydrate-forming metal salt is obtained by, for example, synthesizing hydrate, followed by dehydration. A completely dehydrated and dry compound (anhydride) is preferred in the view of hygroscopicity, but a partially dehydrated compound, in other words, a hydrate containing water less than saturated amount may also be used.

As a metal for the hydrate-forming metal salt, monovalent, divalent, or trivalent metal may be used. Monovalent metal includes alkali metal such as sodium and potassium. Divalent metal includes alkaline earth metal such as beryllium, magnesium, and calcium, and transition metal forming divalent ion such as copper, zinc, and iron. Trivalent metal includes aluminum and iron. Among them, sodium and magnesium are preferred.

Acid as a constituent of the hydrate-forming metal salt includes sulfuric acid, carboxylic acid, phosphoric acid, boric acid, nitric acid, carbonic acid, sulfurous acid, and the like. Of these, sulfuric acid, carboxylic acid, and phosphoric acid are preferred.

Examples of the hydrate-forming metal salt include chloride such as cobalt chloride, calcium chloride, and magnesium chloride; phosphate such as monosodium dihydrogen phosphate, disodium monohydrogen phosphate, trisodium phosphate, sodium pyrophosphate , and calcium hydrogen phosphate; carboxylate such as disodium succinate, sodium tartrate and trisodium citrate; sulfate such as sodium sulfate, potassium sulfate and magnesium sulfate. Of these, sulfate, in particular partially or completely dehydrated magnesium sulfate is preferable in the view of recovery of gas-barrier property after retorting treatment.

Such a hydrate-forming metal salt can form a hydrate having crystallization water. Examples of the metal sulfate having crystallization water include monovalent metal salt such as sodium sulfate ($Na_2SO_4 \cdot 10H_2O$) and potassium sulfate ($K_2SO_4 \cdot 1H_2O$); alkaline earth metal salt such as beryllium sulfate ($BeSO_4 \cdot 4H_2O$), magnesium sulfate ($MgSO_4 \cdot 7H_2O$), and calcium sulfate ($CaSO_4 \cdot 2H_2O$); transition metal salt such as copper sulfate ($CuSO_4 \cdot 5H_2O$), zinc sulfate ($ZnSO_4 \cdot 7H_2O$), and iron sulfate ($FeSO_4 \cdot 7H_2O$); aluminum sulfate ($Al_2(SO_4)_3 \cdot 16H_2O$), and so on. A respective saturated hydrate of metals is represented by the chemical formula noted in brackets.

The drying agent (B) employs a partially or completely dehydrated compound capable of forming an above-mentioned hydrate. The partially dehydrated compound corresponds to a dehydrated metal salt hydrate where a part of crystallization water is removed from the saturated hydrate, and has usually crystallization water less than 90 wt% based on the total weight of the crystallization water of saturated hydrate thereof. Since it is preferably used that a partially dehydrated one is more stable than a saturated hydrate one at a normal temperature, a hydrate containing less than 70 % of crystallization water of saturated hydrate is preferred, completely dehydrated compound is more preferred.

The content of drying agent (B) is in the range of usually 50/50 to 1/99, more preferably 30/70 to 1/99, further preferably 20/80 to 5/95, particularly preferably 15/85 to 5/95, in terms of mixing weight ratio (B/A). In the case that the drying agent (B) is a partially dehydrated compound of metal salt having crystallization water, the mixing ratio (B/A) represents the weight ratio of the completely dehydrated compound to the component (A).

Unduly high content of drying agent (B) tends to impair transparency or block openings of the screen mesh set in molding machine due to aggregation when molding. Unduly low content of drying agent (B) tends to become insufficient removal effect of moisture absorbed into EVOH resin (A), and makes difficult to obtain satisfied gas-barrier property after hydrothermal treatment such as boiling treatment and retorting treatment.

(3) Other additives

The resin composition layer ($\alpha$) constituting the multilayer structure of the invention contains, if necessary, an optional additive including other thermoplastic resin (C), planar inorganic filler (D), and additive (E), in addition to the earlier described EVOH resin (A) and drying agent (B).

(3-1) Other thermoplastic resin (C)

Other thermoplastic resin includes, for instance, polyolefin-based resin in broad including olefin homo- or copolymer, polycyclic olefin, a modified olefin homo- or copolymer graft modified with unsaturated carboxylic acid or its ester; polystyrene-based resin, polyester, polyamide, copolyamide, polyvinyl chloride, polyvinylidene chloride, acryl-based resin, vinyl ester-based resin, polyester elastomer, polyurethane elastomer, chlorinated polyethylene, chlorinated polypropylene, and the like thermoplastic resin. Examples of the olefin homo- or copolymer include linear low density polyethylene, low density polyethylene, medium density polyethylene, high density polyethylene, ethylene-vinyl acetate copolymer, ionomer, ethylene-propylene copolymer, ethylene-acrylic acid ester copolymer, polypropylene, propylene-$\alpha$-olefin (having from 4 to 20 carbon atoms) copolymer, polybutene, and polypentene.

In particular, when the multilayer structure of the invention is used for a wrapping film for food, addition of polyamide resin is preferred, because the polyamide resin is able to prevent the elution of EVOH resin from the ends of the EVOH resin composition layer of the wrapping film after hydrothermal treatment. A polyamide resin is capable of forming network structure through interaction between amide bond of the polyamide resin and OH group and/or ester group of EVOH resin, and thereby preventing the elution of EVOH resin during hydrothermal treatment. Accordingly, in the case of multilayer structure used for wrapping film of retort food or boiled food, polyamide resin may be contained in the EVOH resin composition.

Any known polyamide resin may be used.

Examples of homopolymer polyamide include polycapramide (nylon 6), poly-$\omega$-aminoheptanoic acid (nylon 7), poly-$\omega$-aminononanoic acid (nylon 9), polyundecanamide (nylon 11), and polylauryl lactam (nylon 12). Examples of copolyamide resin include aliphatic polyamide such as polyethylenediamine adipamide (nylon 26), poly(tetramethylene adipamide) (nylon 46), poly(hexamethylene adipamide) (nylon 66), poly(hexamethylene sebacamide) (nylon 610), poly(hexamethylene dodecamide) (nylon 612), poly(octamethylene adipamide) (nylon 86), poly(decamethylene adipamide) (nylon 108), caprolactam/lauryl lactam copolymer (nylon 6/12), caprolactam/$\omega$-aminononanoic acid copolymer (nylon 6/9), caprolactam/hexamethylene diammonium adipate copolymer (nylon 6/66), lauryl lactam/hexamethylene diammonium adipate copolymer (nylon 12/66), ethylenediamine adipamide/hexamethylene diammonium adipate copolymer (nylon 26/66), caprolactam/hexamethylene diammonium adipate/hexamethylene diammonium sebacate copolymer (nylon 66/610), ethylene ammonium adipate/hexamethylene diammonium adipate/hexamethylene diammonium sebacate copolymer (nylon 6/66/610), and so on; aromatic polyamide such as poly(hexamethylene isophthalamide), poly(hexamethylene terephthalamide), poly(metaxylylene adipamide), hexamethylene isophthalamide/terephthalamide copolymer,

poly(p-phenylene terephthalamide), poly(p-phenylene)-3,4'diphenyl ether terephthalamide, and so on; amorphous polyamide; modified polyamide resin obtained by modifying a polyamide resin mentioned above with aromatic amine such as methylenebenzylamine, metaxylene diamine; metaxylylene diammonium adipate; and terminal-modified polyamide resin thereof. Of these, terminal-modified polyamide resin is preferred.

Terminal-modified polyamide resin is a polyamide resin modified with, for example, hydrocarbon group having from 1 to 22 carbon atoms. A commercially available terminal-modified polyamide resin may be used. More particularly, preferably used is a terminal-modified polyamide resin satisfying the following equitation, wherein [X] is a number of terminal COOH group of the terminal-modified polyamide resin, and [Y] is a number of terminal $CONR_1R_2$ group wherein $R_1$ represents hydrocarbon group having from 1 to 22 carbon atoms, $R_2$ represents hydrogen atom or hydrocarbon group having from 1 to 22 carbon atoms:

$$100 \times Y/(X+Y) \geqq 5$$

A terminal-modified polyamide resin is a N-substituted amide polyamide usually obtained by modifying carboxyl group of unmodified polyamide resin with terminal control agent, and modification rate based on the total amount of carboxyl group contained in unmodified polyamide resin is 5 % or more. Unduly low modification rate means that the polyamide resin has considerable amount of residual carboxyl groups, which react with EVOH resin to produce gel or the like during melt-molding, resulting in worse appearance of the resultant film. A terminal-modified polyamide resin can be produced by a method disclosed in, for instance, examined patent publication Hei08-19302.

Amine reactive with carboxyl group is used for the terminal control agent in order to decrease carboxyl groups in polyamide resin. Such amine is monosubstituted amine or disubstituted amine represented by $HNR_1R_2$, wherein $R_2$ is hydrogen atom in the case of monosubstituted amine. In $HNR_1R_2$, when $R_1$ and/or $R_2$ is an organic group, the organic group may be hydrocarbon group without carboxyl group, preferably aliphatic hydrocarbon group. $R_1$ and $R_2$ may have other functional group such as hydroxyl group, amino group, and carbonyl group, unless the gist of the invention is inhibited. Specifically, $R_1$ and $R_2$ are hydrocarbon group having from 1 to 22 carbon atoms, preferably 5 to 20 carbon atoms. Also, $R_1$ and $R_2$ may be the same or different

A preferable terminal-modified polyamide resin has smaller amount of residual carboxyl group even in the case that the carboxyl groups at the terminal thereof is not modified. The amount of carboxyl group in the terminal-modified polyamide resin is usually from 0 to 50 μeq, preferably 0 to 30 μeq, particularly preferably 0 to 25 μeq, per 1g of polymer, in terms of molar equivalent amount relative to 1g of polymer, as a value calculated by titrating a solution dissolving polyamide resin in benzyl alcohol with 0.1N sodium hydroxide aqueous solution. Unduly large amount of residual carboxyl groups may generate gels during the production of film, resulting in a film with inferior appearance and lowering of retortability. Unduly small amount of residual carboxyl groups may decrease productivity but not impair physical properties of the resulting film, therefore a certain amount of residual carboxyl groups is not problematic. In the case of remaining unmodified carboxyl groups, the amount is in the range of usually 5 to 50 μeq, preferably 10 to 30 μeq, particularly 15 to 25 μeq, relative to 1 g of polymer.

Also, the terminal $NH_2$ group in the unmodified polyamide resin is preferably modified with hydrocarbon group having from 1 to 22 carbon atoms in similar manner to the terminal carboxyl group. A terminal control agent used for the modification is a carboxylic acid reactive with amino group in order to decrease amount of amino groups in polyamide resin, specifically monocarboxylic acid or RCOOH wherein R represents a hydrocarbon group having from 1 to 22 carbon atoms.

Such terminal-modified polyamide resin has a melting point of usually 200 to 250 °C, preferably 200 to 230°C.

When polyamide resin is used as the other thermoplastic resin (C), the content of the polyamide resin is usually from 1 to 30 wt%, preferably 3 to 25 wt%, particularly preferably 5 to 15 wt%, relative to the weight of EVOH resin (A).

Even if the case that a resin like a polyamide resin exhibiting a viscosity behavior when mixed with EVOH resin is used for the component (C), the increase of viscosity during melt-kneading process is suppressed by containing completely or partially dehydrated polyvalent metal sulfate hydrate as a drying agent (B) in the resin composition. Therefore, the inventive resin composition is possible to moderately control its viscosity and ensure a good melt-molding property.

According to an embodiment of the invention, a resin composition comprising, as a component (C), a resin such as polyamide resin increasing viscosity when mixed with EVOH resin, in addition to (A) EVOH resin and (B) completely or partially dehydrated polyvalent metal sulfate hydrate, has a following moderated viscosity. For example, the resin composition pellet 55 g prepared by melt-kneading the resin composition has a ratio (120 min/10 min) of usually 0.3 to 1, preferably 0.5 to less than 1, wherein the ratio is a ratio of measurement torque values (Nm) after 120 minutes to after 10 minutes from the start of the measurement. The measurement is carried out in the manner that the pellet is charged into a torque examination type rheometer ("Plasti-Corder PLE331" from Brabender GmbH & Co. KG, roller

mixer: W50E) set at 230 °C, and pre-heated for 5 minutes, followed by melt-kneading with rotational frequency of 50 rpm, and measuring the torque at the indicated times.

(3-2) Planar inorganic filler (D)

According to the invention, the EVOH resin composition may further contain planar inorganic filler, in addition to (A) EVOH resin and (B) drying agent, and optional (C) other thermoplastic resin.

The planar inorganic filler includes, for instance, plate-like kaolin containing hydrous aluminum silicate as main component; layered silicic acid mineral such as mica; and talc comprising magnesium hydroxide and silicate. Of these, kaolin is preferred. Any type of kaolin including fired kaolin as well as natural kaolin may be used, and fired kaolin is preferably used.

Addition of such planar inorganic filler may considerably improve gas-barrier property of the resin composition. The planar inorganic filler has a layered structure and the (B) drying agent can intercalate between the layers of the filler, thereby preventing the filler from crush or segmentation through contact and collision of fillers during mixing. In addition, the plate-like filler would be present in the resulting film such that the plate of the filler is oriented along the plate direction of the film. It is supposed that the planar inorganic filler oriented along the plate direction of the film would contribute to block the penetration of oxygen into the resin composition layer.

The content of the planar inorganic filler is not limited, but usually from 1 to 20 wt%, preferably 3 to 20 wt%, more preferably 5 to 15 wt%, relative to the weight of EVOH resin (A).

(3-3) Other additive (E)

Besides the EVOH resin, drying agent, other thermoplastic resin, and planar inorganic filler, EVOH resin composition of the EVOH resin composition layer ($\alpha$), may optionally contain plasticizer including aliphatic polyalcohol such as ethylene glycol, glycerin, and hexanediol; lubricant including saturated aliphatic amide (e.g. stearamide), unsaturated fatty acid amide (e.g. amide oleate), bis-fatty acid amide (e.g. ethylene bis stearamide), low molecular weight polyolefin (e.g. low molecular weight polyethylene having a molecular weight about 500 to about 10000, or low molecular weight polypropylene), and so on; antiblocking agent; antioxidant; colorant; antistatic agent; ultraviolet absorber; insecticide; inorganic filler having a shape such as granular, acicular, or the other shape except plate; oxygen scavenger; surfactant, wax; dispersing agent such as stearic acid monoglyceride, calcium stearate and magnesium stearate; and other known additives.

Such additive may contain in an amount of usually 10 wt% or less, preferably 5 wt% or less, particularly preferably 0.1 to 3 wt%, based on the total weight of the resin composition.

(4) Preparation of EVOH resin composition

The EVOH resin composition is a resin comprising the optional components (C), (D), and (E), in addition to the components (A) and (B). Embodiments of the EVOH composition include a first composition comprising components (A) and (B), and optionally comprising component (E); a second composition comprising the components (A), (B), and (C), and optionally comprising component (E); a third composition comprising the components (A), (B), and (D), and optionally component (E); and a fourth composition comprising the components (A), (B), (C), and (D), and optionally comprising component (E).

EVOH resin composition is usually prepared by melt-kneading or mechanically mixing (i.e. dry blending pellets of) components (A) and (B), and optional component (C), (D), and/or (E), preferably prepared by melt-kneading method.

The viscosity decrease when melt-kneading the composition, which is an effect by containing magnesium sulfate, can contribute stable and uniform production of any composition including the above-mentioned embodiments.

In melt-kneading method, examples of mixing order are as follows:

(1) simultaneously melt-kneading components (A) and (B), if necessary, and optional components (C) to (E); and
(2) melt-kneading component (B) and an optional component (D), with a prepared melted component (A) and an optional component (C).

In the case of blending component (C), examples of mixing order are as follows:

(3) melt-kneading component (B) and an optional component (D) with either resin (A) or (C), followed by melt-kneading the residual resin; and (4) preparing a mixture of excessive content of component (B) and an optional component (D) with resin (A) and/or (C), which called as master batch, and diluting the component (B) by adding resin (A) and/or (C) to the master batch. The component (E) may be blended in the order arbitrary selected.

A melt-kneading apparatus is not limited and any known melt-kneading machine, for instance, kneader-ruder, mixing roll, banbury mixer, (labo) plastomill, and extruder may be used. Extruder includes single- or twin-axial extruder, and may be preferably equipped with vent suction, gear pump, screen, and so on. The melt-kneading temperature is usually selected from 150 to 300 °C, preferably 170 to 250 °C.

[Polyamide resin layer (β)]

A known polyamide resin including one listed in the resin composition layer (α) may be used for polyamide resin layer (β).

Specific examples of the polyamide resin include homopolymer such as polycapramide (nylon 6), poly-ω-aminoheptanoic acid (nylon 7), poly-ω-aminononanoic acid (nylon 9), polyundecanamide (nylon 11), and polylauryl lactam (nylon 12), and copolyamide resin. The copolyamide resin includes aliphatic polyamide such as polyethylenediamine adipamide (nylon 26), poly(tetramethylene adipamide) (nylon 46), poly(hexamethylene adipamide) (nylon 66), poly(hexamethylene sebacamide) (nylon 610), poly(hexamethylene dodecamide) (nylon 612), poly(octamethylene adipamide) (nylon 86), poly(decamethylene adipamide) (nylon 108), caprolactam/lauryl lactam copolymer (nylon 6/12), caprolactam/ω-aminononanoic acid copolymer (nylon 6/9), caprolactam/hexamethylene diammonium adipate copolymer (nylon 6/66), lauryl lactam/hexamethylene diammonium adipate copolymer (nylon 12/66), ethylenediamine adipamide/hexamethylene diammonium adipate copolymer (nylon 26/66), caprolactam/hexamethylene diammonium adipate/hexamethylene diammonium sebacate copolymer (nylon 66/610), and ethylene ammonium adipate/hexamethylene diammonium adipate/hexamethylene diammonium sebacate copolymer (nylon 6/66/610); aromatic polyamide such as poly(hexamethylene isophthalamide), poly(hexamethylene terephthalamide), poly(metaxylylene adipamide), hexamethylene isophthalamide/terephthalamide copolymer, poly(p-phenylene terephthalamide), poly(p-phenylene)-3,4'diphenyl ether terephthalamide; amorphous polyamide; and modified polyamide where the above-mentioned polyamide resin modified with aromatic amine such as methylenebenzylamine and metaxylene diamine; metaxylylene diammonium adipate; and their terminal-modified polyamide resin. Of these, terminal-modified polyamide resin is preferred.

As for terminal-modified polyamide resin, terminal-modified polyamide resin listed for the resin composition layer (α) may be also employed.

Polyamide resin used for the polyamide resin layer (β) may optionally contain, in addition to polyamide, a known additive including plasticizer including such as other thermoplastic resin, inorganic filler, and aliphatic polyalcohol; lubricant such as saturated aliphatic amide (e.g. stearamide), unsaturated fatty acid amide (e.g. amide oleate), bis-fatty acid amide (e.g. ethylene bis stearamide), low molecular weight polyolefin (e.g. low molecular weight polyethylene having a molecular weight from about 500 to about 10000, or low molecular weight polypropylene); antiblocking agent; antioxidant; colorant; antistatic agent; ultraviolet absorber; insecticide; filler (e.g. non-plate inorganic filler such as granular or acicular inorganic filler); oxygen scavenger; surfactant, wax; dispersing agent (e.g. stearic acid monoglyceride, calcium stearate, magnesium stearate). The content of the additives is preferably at most 50 % by mass.

The amide bond ratio to the polyamide resin molecule is 20 % to 60 %, preferably 30 % to 50 %, particularly preferably 35 % to 45 %, in terms of molecular weight of amide bond per 1 unit of polyamide. Unduly low amide bond ratio tends to lower the bonding strength between the polyamide and EVOH resin at interface. On the contrary, unduly high amide bond ratio tends to react with EVOH resin during melt-molding, to generate gel-like polymer and so on, resulting in obtaining a film having worse appearance.

The polyamide resin has a melting point of 160 to 270 °C, preferably 180 to 250 °C, particularly preferably 200 to 230°C. A polyamide resin having too low melting point may cause impairing the thermostability of the resultant multilayer structure. On the other hand, a polyamide resin having too high melting point, which has a large difference from that of the EVOH resin composition typically having a melting point from 150 to 200 °C, may generate turbulent flow at joining for producing a laminated unit, resulting in obtaining a multilayer structure having worse appearance. Furthermore, if the die temperature to be set when coextruding with EVOH resin composition is selected merely with taking into consideration the melting point of polyamide resin, EVOH resin may be easily subjected to thermal deterioration.

From the above-mentioned viewpoints, the polyamide for the polyamide resin layer (β) has a melting point of 160 to 270 °C, preferably 180 to 250 °C, particularly preferably 200 to 230 °C, and has an amide bond ratio of 20 % to 60 %, preferably 30 % to 50 %, particularly preferably 35 % to 45 %. Preferable examples of the polyamide are nylon 6 (melting point: about 220 °C, amide bond ratio: 38 %) and nylon 6/66 (melting point: about 200 °C, amide bond ratio: 38 %).

[Unit of polyamide resin layer/EVOH resin composition layer/polyamide resin layer]

The multilayer structure of the present invention is a multilayer structure comprising a laminated unit of polyamide resin layer/EVOH resin composition layer/polyamide resin layer wherein the EVOH resin composition layer (α) is sandwiched by polyamide resin layers (β) and the adjacent layers are integrally laminated.

The layers of the unit of polyamide resin layer/EVOH resin composition layer/polyamide resin layer are integrated

and dealt as one gas-barrier layer in multilayer structure. The unit is obtained by coextruding polyamide resin and EVOH resin in the manner that the polyamide resin layers (β) are laid on the upper and lower surfaces of the EVOH resin composition layer (α). Thus obtained unit is integrally bound at the interface between layers.

In particularly, polyamide resin and EVOH resin composition are preferably coextruded at a temperature of about 200 to about 280 °C. Coextrusion under such temperature condition can enhance the binding strength between EVOH resin composition layers and polyamide resin layers as well as suppress generation of turbulent flow or gel-like polymer causing a worse appearance.

The polyamide resin layers in the unit of polyamide resin layer/EVOH resin composition layer/polyamide resin layer may employ the same or different polyamide resin from each other. The respective polyamide resins for respective polyamide resin layers have an amide bond ratio of 20 to 60 %, preferably 30 to 50 %, more preferably 35 to 45 %.

Polyamide resin can form a network structure by interacting between hydroxyl groups of EVOH resin and amide groups of polyamide resin when EVOH resin and polyamide resin composition are coextruded. Accordingly, the resulting polyamide resin layer can be laminated on the EVOH resin composition layer strongly bound at interface thereof, and the resulting laminated unit may be dealt as one integrated unit.

According to the invention, the multilayer structure comprises at least one laminated unit having a structure as described above, a multilayer structure comprising two or more laminated units is also included in the scope of the invention. In the multilayer structure comprising two or more laminated units, another resin layer may be interposed between the laminated units. And one polyamide resin layer may double for two units, such as polyamide resin layer/EVOH resin composition layer/polyamide resin layer/EVOH resin composition layer/polyamide resin layer.

A method other than coextrusion may be employed for production of the laminated unit as far as the method can achieve integrally binding between polyamide resin layer and EVOH resin composition layer. A possible method includes, for example, a melt extruding polyamide-based resin on an EVOH resin composition film or sheet; a melt extruding EVOH resin composition on a polyamide resin film; and applying EVOH resin composition solution over a polyamide resin film, followed by removing the solvent of the solution.

[Other layer]

The multilayer structure of the present invention may comprise another one or more layers laminated on upper or lower face of the laminated unit.

(1) Substrate layer made of other resin

Lamination of another substrate on the laminated unit of polyamide resin layer/EVOH resin composition layer/polyamide resin layer may enhance the mechanical strength or give additional function. In particular, lamination of a hydrophobic resin layer on one side, preferably both sides of the laminated unit is preferred, because the laminated hydrophobic resin layer can prevent external moisture from permeating into the laminated unit. Accordingly, such multilayer structure is preferably subjected to hydrothermal treatment including retorting treatment.

A preferable resin used for the substrate layer is a thermoplastic resin other than EVOH resin (hereinafter called as "other resin"). A recycled resin prepared by re-melting edge portion or defective product obtained in the process of the production of the multilayer structure may be used. The recycled resin contains a melted mixture of EVOH resin composition layer, polyamide resin layer, and other resin of a substrate layer.

In case that substrate layer (y layer) or recycled resin layer (R layer) has an insufficient adhesiveness to polyamide resin layer, an adhesive resin layer may be optionally interposed between the polyamide resin layer and substrate layer or recycled resin layer, or between substrate layers, or between substrate layer and recycled layer.

The total number of the layers of the multilayer structure is in the range of usually 3 to 15, preferably 4 to 10.

Among the above-mentioned multilayer structures, a structure where substrate layers are laid on both faces of the unit of polyamide resin layer/EVOH resin composition layer (α)/polyamide resin layer, that is, γ/β/α/β/γ or γ/adhesive resin layer/β/α/β/adhesive resin layer/y is preferred from the viewpoint of increasing mechanical strength or giving an additional function. A structure of γ/adhesive resin layer/β/α/β/adhesive resin layer/γ is particularly preferred from the point of adhesiveness. Employment of a hydrophobic resin for substrate layer (γ) or adhesive resin layer in the multilayer structure may be free from absorbing external moisture, and therefore such multilayer structure is supposed to advantageously obtain a drying effect of the component (B). For these reasons, in the case of a multilayer structure for wrapping material subjected to hydrothermal treatment, it is preferred to laminate substrate layer(s) on one face, preferably both faces, of the laminated unit.

Examples of the "other resin" include polyolefin-based resin in a broad meaning, ionomer, ethylene-vinyl acetate copolymer, ethylene-acrylic acid copolymer, ethylene-acrylic acid ester copolymer, polyester-based resin, polyamide resin including copolyamide, polyvinyl chloride, polyvinylidene chloride, acryl-based resin, polystyrene, vinyl ester-based resin, polyester elastomer, polyurethane elastomer, halogenated polyolefin such as chlorinated polyethylene and chlorinated polypropylene, aromatic or aliphatic polyketones, or the like. The polyolefin-based resin in a broad meaning include unmodified polyolefin-based resin including polyethylene-based resin such as linear low density polyethylene, low density polyethylene, very low density polyethylene, medium density polyethylene, high density polyethylene, ethylene-propylene block- or random-copolymer, and ethylene-$\alpha$-olefin (having from 4 to 20 carbon atoms) copolymer, polypropylene-based resin such as polypropylene, propylene-$\alpha$-olefin (having from 4 to 20 carbon atoms) copolymer, polybutene, polypentene, polycyclic olefin-based resin having a cyclic olefin structure in a main chain and/or side chain thereof; unsaturated carboxylic acid-modified polyolefin-based resin where a polyolefin listed above is graft modified with unsaturated carboxylic acid or its ester, and the like modified olefin-based resin.

Even a multilayer structure merely consisting of the laminated unit can prevent external moisture from going into the multilayer structure due to the hydrophobic polyamide resin layer thereof. However, further lamination of hydrophobic resin layer on one face or both faces of the polyamide resin layer is preferred in the point of preventing external moisture from going into the multilayer structure and therefore protecting the EVOH resin composition layer. In this case, more hydrophobic resin than polyamide resin, for example, polyolefin-based resin, polyester-based resin, or polystyrene-based resin is preferably used for the hydrophobic resin layer. Polyethylene-based resin, polypropylene-based resin, polycyclic olefin-based resin, or an unsaturated carboxylic acid-modified polyolefin-based resin thereof, or the like polyolefin-based resin is more preferably used, polyolefin-based resin is further preferably used, and polypropylene resin is particularly preferably used.

(2) Adhesive resin layer

In a multilayer structure comprising substrate layer of other resin, an adhesive resin layer may be optionally interposed between the substrate layer and polyamide resin layer, if the adhesive between the layers is insufficient.

A known resin may be used for the adhesive resin, and may be properly selected depending on types of thermoplastic resin of the substrate layer ($\gamma$). A typical resin for the adhesive resin is a modified polyolefin-based polymer having carboxyl group obtained by addition reaction or grafting reaction of polyolefin-based resin with an unsaturated carboxylic acid or anhydride thereof. Examples of the modified polyolefin-based polymer include maleic anhydride graft modified polyethylene, maleic anhydride graft modified polypropylene, maleic anhydride graft modified ethylene-propylene block- or random-copolymer, maleic anhydride graft modified ethylene-ethylacrylate copolymer, maleic anhydride graft modified ethylene-vinyl acetate copolymer, maleic anhydride-modified polycyclic olefin-based resin, maleic anhydride graft modified polyolefin-based resin, and the like. One or a combination of them may be used for the adhesive resin.

The resin for the substrate layer or the adhesive resin may contain a conventionally known plasticizer, filler, clay (e.g. montmorillonite), colorant, antioxidant, antistatic agent, lubricant, nucleating agent, antiblocking agent, ultraviolet absorber, or wax, in an amount not inhibiting the gist of the invention, for example, at most 30 wt%, and preferably at most 10 wt%.

[Production of multilayer structure]

According to the invention, a method for producing a multilayer structure comprises a process of coextruding a resin composition with polyamide resin on upper and lower sides of the resin composition to form a laminated unit ($\beta/\alpha/\beta$) wherein a resin composition layer ($\alpha$) is sandwiched by polyamide resin layers ($\beta$), and the resin composition comprises (A) a saponified ethylene-vinyl ester copolymer and (B) a drying agent. The coextruding process is preferably carried out at a temperature of 200 to 280 °C.

In the case of producing a multilayer structure comprising at least one selected from the group consisting of substrate layer, recycled resin layer, and adhesive resin layer, the following method is usually employed:

i) a method of coextruding resins for the above-mentioned other layers with the unit of polyamide resin layer/EVOH resin composition layer/polyamide resin layer;

ii) a method of dry laminating a film or sheet of other resin for substrate, recycled resin, or adhesive resin on the laminated unit of polyamide resin layer/EVOH resin composition layer/polyamide resin layer;

iii) a method of melt-coextruding resins for forming a laminated unit of polyamide resin/EVOH resin composition/polyamide resin, on the surface of the layered structure comprising films or sheets of other resin, recycled resin, adhesive resin, or combination of them.

Also, a method of applying a solution of other resin, recycled resin, or adhesive over the laminated unit of polyamide resin layer/EVOH resin composition layer/polyamide resin layer, followed by removing the solvent of the solution may be employed. Among these methods, the method i) is preferred from the viewpoint of productivity.

Thus produced multilayer structure may be optionally (heat) stretched. Either uniaxial stretching or biaxial stretching may be conducted as a stretching treatment. And either simultaneous stretching or sequential stretching may

be conducted as the biaxial stretching. Roll stretching, tenter stretching, tubular stretching, stretch blow molding, and vacuum-pressure forming may be employed for the stretching method, and a stretching method selecting a high stretching magnification may also be employed. A stretching temperature is selected from the range of usually 40 to 170 °C, preferably 60 to 160 °C, as a temperature near the multilayer structure. Unduly low stretching temperature may cause insufficient stretchability. Unduly high stretching temperature may become difficult in maintaining a stable stretching condition.

Heat setting may be carried out after stretching for the purpose of imparting dimensional stability. The heat setting may be performed using a conventional technique, for example, by heating for usually 2 to 600 seconds at usually 80 to 180 °C, preferably 100 to 165 °C, under tension of the stretched film.

A thickness of a multilayer structure or stretched multilayer structure, and individual thicknesses of resin composition layer, other thermoplastic resin layer, and adhesive resin layers in the multilayer structure, depend on layer constitution, types of thermoplastic resin, types of adhesive resin, use application, wrapping configuration, or intended physical properties. A thickness of a multilayer structure or stretched multilayer structure is in the range of usually 10 to 5000 $\mu$m, preferably 30 to 3000 $\mu$m, particularly preferably 50 to 2000 $\mu$m. A thickness of the EVOH resin composition layer is in the range of usually 1 to 500 $\mu$m, preferably 3 to 300 $\mu$m, particularly preferably 5 to 200$\mu$m. A thickness of the polyamide resin layer is in the range of usually 0.5 to 250 $\mu$m, preferably 1 to 150 $\mu$m, more preferably 3 to 100 $\mu$m, particularly preferably 3 to 20 $\mu$m. A thickness of the substrate layer is in the range of usually 5 to 30000 $\mu$m, preferably 10 to 20000 $\mu$m, particularly preferably 20 to 10000 $\mu$m. A thickness of the adhesive resin layer is in the range of usually 0.5 to 250 $\mu$m, preferably 1 to 150 $\mu$m, particularly preferably 3 to 100 $\mu$m.

[Use application of multilayer structure]

A multilayer structure having a structure described above prevents occurrence of a blister even after exposure to high humidity condition, and thereby maintaining an excellent early appearance. In this multilayer structure, the occurrence of a blister observed in a typical multilayer structure of polyolefin-based resin layer/adhesive resin layer/EVOH + Dy/adhesive resin layer/polyolefin-based resin layer, did not observed, wherein the "EVOH + Dy" represents EVOH resin composition layer containing drying agent, and acts as a gas-barrier layer. Since the occurrence of a blister is a phenomenon not observed in a multilayer structure without drying agent, the phenomenon is supposed to result from addition of the drying agent. The present inventors have examined reasons of the phenomenon, and detected a metal derived from the drying agent in the blister. The inventors have concluded as follows. A hydrate-forming metal salt used as a drying agent exists stably in a hydrate form by absorbing moisture under the condition of some extent of moisture and/or hydroscopic moisture. However, after the hydrate-forming metal salt reaches to the saturation of hydrate, the resulting metal salt hydrate would dissolve in an excess moisture and/or hydroscopic moisture to become a concentrated aqueous solution of the metal salt. The resulting solution would not be incorporated in the EVOH resin, and pooling on the surface boundary between EVOH resin layer and adhesive layer. On the other hand, in the case of the multilayer structure of the invention where the EVOH resin composition layer and the polyamide resin layer are laminated integrally, the resulting solution of the drying agent is presumed to diffuse in the EVOH resin composition layer in place of pooling on the surface boundary.

A multilayer structure of the present invention can keep excellent appearance even after being left under high humidity condition for long hours, and therefore is suitable for a gas-barrier layer of a wrapping material such as wrapping container or film for various goods including general food as well as condiment such as mayonnaise and dressing, fermented food such as miso, oil and fat food such as salad oil, beverages, cosmetics, and drugs.

Advantageously, a multilayer structure of the invention is useful for wrapping material for food to be subjected to hydrothermal treatment because the multilayer structure can keep excellent gas-barrier property even after hydrothermal treatment.

[Example]

The present invention will be described with specific examples. The present invention is not limited to the examples unless departing from the gist of the invention.

Incidentally, "parts" are by weight unless otherwise noted.

[Preparation of EVOH resin composition containing drying agent]

A saponified ethylene-vinyl ester-based copolymer having 29 mol% of ethylene unit content, 99.7 mol% of saponification degree and MFR of 4 g/10 min (210 °C, load of 2160 g) was used for EVOH resin (A). A terminal-modified 6 nylon having a melting point of 220 °C and terminal carboxyl group content of 20 $\mu$eq/polymer was used for other thermoplastic resin (C). Magnesium sulfate for drying agent (B), and calcium stearate anhydride ("Nissan Calcium

Stearate S" from NOF CORPORATION) for additive (E) were used.

The mixture of 80 parts of the EVOH resin and 10 parts of 6 nylon as the resin (C) were fed to a hopper of a twin screw extruder. Next, a mixture of 9 parts of magnesium sulfate anhydride as the drying agent (B) and 1 part of calcium stearate as the additive (E) was fed to the hopper using powder feeder. The mixture was melt-kneaded and extruded in a strand form through twin screw extruder (φ 44 mm, L/D = 52) equipped with two mixing zones, wherein the extruder was set as the following temperature pattern: C2/C3/C4/C5/C6/C7/C8/C9/C10/C11/C12/C13/C14/C15/D = 50/80/170/230/240/230/230/230/230/240/240/240/230/230/220 °C. The obtained strand was cut to provide cylindrical pellets of the resin composition.

[Production of multilayer structure Nos. 1 to 5]

5-type 7-layer multilayer structures shown in Table 1 were produced with use of a coextrusion multilayer film forming apparatus equipped with a 5-type 7-layer feedblock, a die for forming multilayer film, and winder. The 5-type 7-layer multilayer structures each has EVOH resin composition layer (α) of the above-prepared EVOH resin composition, polyamide resin layer (β) of 6 nylon ("Novamid 1022BLMJ"™ having amide bond content of 38 % from Mitsubishi Engineering-Plastics Corporation) or 6/66 nylon ("Novamid2420J"™ having amide bond content of 38 % from Mitsubishi Engineering-Plastics Corporation), adhesive resin layer of maleic anhydride-modified polypropylene resin ("Plexar PX6005" from lyondellbasel), and substrate layer (γ) of polypropylene ("EA7A" from Japan Polypropylene Corporation).

The extrusion was performed under the condition of the die set at 240 °C, and the extruded product was cooled with a chill roll in which cooling water was circulated. The 5-type 7-layer multilayer structure has thicknesses (μm) of 40/20/10/40/10/20/40 in order from the surface layer. The produced multilayer structures were evaluated with respect to adhesiveness between layers and appearance (i.e. presence or absence of blister) according to the following method. The evaluation results are also shown in Table 1.

(1) Adhesiveness between layers

A multilayer structure was cut in 15 mm width, and nicked with a razor blade between EVOH resin composition layer (α) and polyamide resin layer (β) (or an adjacent layer of the resin composition layer). Adhesiveness was examined by pulling two separated parts of the nicked layers with hands or tweezers and observing whether the multilayer structure was delamination or not.

(2) Appearance (presence or absence of blister)

A multilayer structure was left in constant temperature and constant humidity chamber set at 40 °C and 90 %RH for a certain period, and thereafter observed presence or absence of blister. The presence of blister was evaluated as an inferior appearance (NG), and the absence of blister was evaluated as a good appearance (OK).

[Table 1]

| multilayer structure No. | layer constitution | appearance evaluation | | | adhesiveness between layers |
|---|---|---|---|---|---|
| | | after 6 days | after 10 days | after 70 days | |
| 1 | PP/Ad/Ny6/EVOH + Dy/Ny6/Ad/PP | OK | OK | OK, even after100 days | no delamination |
| 2 | PP/Ad/Ny6·66/EVOH+Dy/Ny6·66/Ad/PP | OK | OK | OK | no delamination |
| 3 | PP/Ad/EVOH/EVOH + Dy/EVOH/Ad/PP | OK | NG | - | delamination |
| 4 | PP/Ad/Ad/EVOH + Dy/Ad/Ad/PP | NG | - | - | delamination |

(continued)

| multilayer structure No. | layer constitution | appearance evaluation | | | adhesiveness between layers |
|---|---|---|---|---|---|
| | | after 6 days | after 10 days | after 70 days | |
| 5 | PP/Ad/PP/EVOH + Dy/PP/Ad/PP | not obtained | - | - | - |
| EVOH + Dy: EVOH resin composition layer containing drying agent<br>Ad: adhesive resin layer<br>Ny6: polyamide of nylon 6 layer<br>Ny6·66: polyamide of nylon 6/66 layer<br>EVOH: EVOH layer without drying agent<br>PP: polypropylene layer | | | | | |

In multilayer structure Nos. 1 and 2, each of which comprises a laminated unit of EVOH resin composition layer (EVOH + Dy) sandwiched by polyamide resin layers of Ny6 or Ny6·66, a blister was not generated even after exposure to the humidity condition as high as 90 %RH for 100 days (No.1) or 70 days (No.2). Therefore, the appearances of these multilayer structures were not changed. Furthermore, multilayer structures were not delaminated between the polyamide resin layer and the EVOH resin composition layer. From these results, the polyamide resin layer and the EVOH resin composition layer were understood to be integrated in the multilayer structures.

On the other hand, in multilayer structure Nos. 3 and 4, each of which comprises a laminated unit of EVOH resin composition layer (EVOH + Dy) sandwiched by layers made of a resin other than polyamide, a blister was generated after exposure to the humidity condition for a short period. Therefore, each of the multilayer structures has inferior appearance. The multilayer structures was cut at the portion of the generated blister, and observed. A blister was observed at the interface between EVOH layer and adhesive layer (Ad), in multilayer structure Nos. 3 and 4. The multilayer structure No. 3 was not separated between EVOH resin composition layer and EVOH layer, but broken up between EVOH layer and adhesive resin layer. The multilayer structure No. 4 was separated between EVOH resin composition layer and adhesive resin layer. From these results, it is understood that polyamide resin layer can make a role as a barrier preventing moisture derived from drying agent from transferring to other layer, and from standing at a certain portion of the interface, as a result, film appearance is not almost impaired.

The multilayer structure No. 5 was not evaluated because the multilayer structure obtained by coextrusion was easily delaminated between the EVOH resin composition layer and polypropylene layer due to poor adhesiveness between them.

**INDUSTRIAL APPLICABILITY**

A multilayer structure of the present invention exhibits excellent gas-barrier property even after wet heat treatment regardless of EVOH resin composition containing drying agent, and is free from impairing appearance caused from the drying agent by the employment of a laminated unit of the EVOH resin composition layer sandwiched by polyamide resin layers in the multilayer structure. Therefore, the multilayer structure is suitable for a container or film wrapping for food because of securing excellent gas-barrier property and appearance thereof.

**Claims**

1. A multilayer structure comprising a laminated unit ($\beta/\alpha/\beta$) wherein polyamide resin layers ($\beta$) are integrally laminated on both faces of a resin composition layer ($\alpha$) containing (A) saponified ethylene-vinyl ester copolymer and (B) drying agent.

2. The multilayer structure according to claim 1, wherein the drying agent is a hydrate-forming metal salt.

3. The multilayer structure according to claim 1 or 2, wherein the polyamide resin of the polyamide resin layer has an amide bond ratio of 20 to 60 %.

4. The multilayer structure according to any one of claims 1 to 3, the content ratio (B/A) of the drying agent (B) to the

saponified ethylene-vinyl ester copolymer (A) is from 50/50 to 1/99 on the basis of weight.

5. The multilayer structure according to any one of claims 1 to 4, further comprising a hydrophobic resin layer laminated on at least one face of the laminated unit.

6. The multilayer structure according to any one of claims 1 to 5, being from 10 to 5000 μm in thickness.

7. A method for producing multilayer structure comprising
coextruding a resin composition containing (A) saponified ethylene-vinyl ester copolymer and (B) drying agent with polyamide resin upper and lower sides of the resin composition to form a laminated unit (β/α/β) of the resin composition layer (α) sandwiched by the polyamide resin layers (β).

8. The method according to claim 7, wherein the coextruding process is carried out at a temperature of 200 to 280 °C.

## Patentansprüche

1. Vielschichtige Struktur, enthaltend eine laminierte Einheit (β/α/β), worin Polyamidharzschichten (β) integral auf beiden Oberflächen einer Harzzusammensetzungsschicht (α) laminiert sind, enthaltend (A) verseiftes Ethylen-Vinylester-Copolymer und (B) Trocknungsmittel.

2. Vielschichtige Struktur gemäß Anspruch 1, worin das Trocknungsmittel ein hydratbildendes Metallsalz ist.

3. Vielschichtige Struktur gemäß Anspruch 1 oder 2, worin das Polyamidharz der Polyamidharzschicht ein Amidbindungsverhältnis von 20 bis 60 % hat.

4. Vielschichtige Struktur gemäß einem der Ansprüche 1 bis 3, worin das Verhältnis des Gehaltes (B/A) des Trocknungsmittels (B) zu dem verseiften Ethylen-Vinylester-Copolymer (A) von 50/50 bis 1/99 auf Gewichtsbasis ist.

5. Vielschichtige Struktur gemäß einem der Ansprüche 1 bis 4, weiterhin enthaltend eine hydrophobe Harzschicht, laminiert auf zumindest einer Fläche der laminierten Einheit.

6. Vielschichtige Struktur gemäß einem der Ansprüche 1 bis 5, die eine Dicke von 10 bis 5.000 μm hat.

7. Verfahren zur Erzeugung einer vielschichtigen Struktur, enthaltend das Coextrudieren einer Harzzusammensetzung, enthaltend (A) verseiftes Ethylen-Vinylester-Copolymer und (B) Trocknungsmittel, mit oberen und unteren Polyamidharzseiten aus der Harzzusammensetzung, zur Bildung einer laminierten Einheit (β/α/β) aus der Harzzusammensetzungsschicht (α), in Sandwichform, angeordnet durch die Polyamidharzschichten (β).

8. Verfahren gemäß Anspruch 7, worin das Coextrusionsverfahren bei einer Temperatur von 200 bis 280°C durchgeführt wird.

## Revendications

1. Structure multicouche comprenant une unité stratifiée (β/α/β) dans laquelle des couches de résine polyamide (β) sont stratifiées d'un seul tenant sur les deux faces d'une couche de composition de résine (α) contenant (A) un copolymère éthylène-ester vinylique saponifié et (B) un agent de séchage.

2. Structure multicouche selon la revendication 1, dans laquelle l'agent de séchage est un sel métallique formant un hydrate.

3. Structure multicouche selon la revendication 1 ou 2, dans laquelle la résine de polyamide de la couche de résine de polyamide a un ratio de liaison amide de 20 à 60 %.

4. Structure multicouche selon l'une quelconque des revendications 1 à 3, le ratio de teneurs (B/A) de l'agent de séchage (B) par rapport au copolymère éthylène-ester vinylique saponifié (A) est de 50/50 à 1/99 sur la base du poids.

**5.** Structure multicouche selon l'une quelconque des revendications 1 à 4, comprenant en outre une couche de résine hydrophobe stratifiée sur au moins une face de l'unité stratifiée.

**6.** Structure multicouche selon l'une quelconque des revendications 1 à 5, ayant une épaisseur de 10 à 5 000 $\mu$m.

**7.** Procédé pour fabriquer une structure multicouche comprenant la coextrusion d'une composition de résine contenant (A) un copolymère éthylène-ester vinylique saponifié et (B) un agent de séchage avec des côtés supérieur et inférieur en résine polyamide de la composition de résine pour former une unité stratifiée ($\beta/\alpha/\beta$) de la couche de composition de résine ($\alpha$) enserrée entre les couches de résine polyamide ($\beta$).

**8.** Procédé selon la revendication 7, dans lequel le procédé de coextrusion est mis en oeuvre à une température de 200 à 280 °C.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4753845 A
- WO 201127741 A